(19) **Europäisches Patentamt / European Patent Office / Office européen des brevets**

(11) **EP 3 845 616 B1**

(12) **EUROPEAN PATENT SPECIFICATION**

(45) Date of publication and mention
of the grant of the patent:
**03.12.2025  Bulletin 2025/49**

(21) Application number: **20305003.4**

(22) Date of filing: **06.01.2020**

(51) International Patent Classification (IPC):
**C09D 13/00** $^{(2006.01)}$        **B43K 19/02** $^{(2006.01)}$
**B43K 19/18** $^{(2006.01)}$        **C08K 7/00** $^{(2006.01)}$
**C08K 3/34** $^{(2006.01)}$          **C08K 5/103** $^{(2006.01)}$

(52) Cooperative Patent Classification (CPC):
(C-Sets available)
**C09D 13/00; B43K 19/02; B43K 19/18;** C08K 3/346
(Cont.)

(54) **LEAD FOR PENCIL FOR WRITING, DRAWING, MARKING, PLOTTING AND/OR COLORING**

BLEISTIFT ZUM SCHREIBEN, ZEICHNEN, MARKIEREN, PLOTTEN UND/ODER FÄRBEN

MINE POUR STYLO D'ÉCRITURE, DESSIN, MARQUAGE, TRAÇAGE ET/OU COLORATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.07.2021  Bulletin 2021/27**

(73) Proprietor: **Société BIC
92110 Clichy (FR)**

(72) Inventor: **GOUEREC, Julien
62200 Boulogne sur Mer (FR)**

(74) Representative: **Cabinet Beau de Loménie
103, rue de Grenelle
75340 Paris Cedex 07 (FR)**

(56) References cited:
**WO-A1-2018/189467        US-A1- 2017 349 775
US-A1- 2018 071 181        US-B2- 6 815 471**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/103, C08L 53/02;**
**C08K 5/103, C08L 55/02;**
**C08K 7/00, C08L 53/02;**
**C08K 7/00, C08L 55/02**

**Description**

The present invention relates to a non-calcined, polymer-based pencil lead.

The main advantage of using a polymer-based pencil lead in a color pencil or graphite pencil, is to combine the benefits of a cost-efficient process of co-extrusion where the different layers (lead and casing, and optionally intermediate protective layer), which are polymer-based, can be assembled in one step, with good mechanical performances of the lead. For these purposes, the lead is based on a polymer as the matrix, such as ABS (acrylonitrile-butadiene-styrene), PS (polystyrene) or polyolefin. This polymer part brings resistance, especially shock resistance, to drop test (i.e. when pencil falls on the floor), avoid the formation of cracks on all the pencil long and prevent from split leads. Also these polymers are easily transformed with high outputs by extrusion and enable to get a consistent compound with pigments, fillers and additives dispersed inside. The drawback concerns mostly the writing/coloring experience. Indeed, contact to the paper is modified due to the polymer, being not as smooth with a rich and vivid deposit as a traditional wood case lead (calcined lead) can be. Depending on the polymer, friction coefficient on paper is high, then scratchy or sticky sensations can be perceived by the consumer who needs to apply more pressure to get an acceptable laydown.

On the contrary, traditional wood case leads (calcined or baked leads) for pencil are not based on polymer binder but on natural fillers, which have been mixed with pigments, additives and a film forming binder such as cellulosic binder, preliminarily dried, the lead being calcined or baked in the process of preparation. Then contact to the paper is not disturbed by any polymer element since it has disappeared during the calcining/baking step, coloring is smooth and glides better on paper. Color is also more vivid. The drawback of this type of lead is the shock resistance, the lead being sensitive to drop test, and breakage at sharpening. Baked/calcined leads have no more resilience to absorb mechanical stress. Then leads can be broken inside the wood core, thus being unsatisfactory for consumers. Moreover, associated process is complex and divided into 2 parts: leads preparation (blending, spinning, drying/calcining and/or baking) and wood slats preparation followed by gluing, assembling, pressing and cutting, thus being time and workforce highly consuming. Relevant wood wastes are also generated.

Therefore it would be interesting to obtain a pencil lead combining the properties of a polymer-based lead (such as cost-efficient process of co-extrusion, only one step during the process, good mechanical performances) and the properties of a traditional calcined or baked lead (such as smoothness, easiness of the deposit, vivid color laydown, smoothness on the paper). In particular, an objective of the present invention is to obtain a pencil lead having good mechanical properties, such as flexibility and/or shock resistance, and exhibit smoothness and/or softness, and/or glide of the lead and which gives a good laydown, such as quality of the deposit, intensity and/or vividness of the deposit, in particular when used on paper for coloring and/or drawing.

The inventors have surprisingly found that it is the case when a lamellar mineral filler having a lamellarity index greater than 2.8 is used in the composition of a polymer-based pencil lead.

WO20218189467 discloses a polymer-based extrudable non-calcined pencil lead comprising kaolin and graphite and in particular BLANKALITE 77 as lamellar mineral filler. BLANKALITE 77 has a lamellarity index of lower than 2.8.

US6815471 discloses a polymer-based extrudable non-calcined pencil lead comprising 32.9 to 52.6 wt. % of talc (Microtuff AG 609) as lamellar mineral filler.

US2017/349775 discloses a polymer-based extrudable non-calcined pencil lead comprising 35 wt. % of kaolin as lamellar mineral filler.

US2018/071181 discloses a cosmetic composition in particular in the form of compact powder or foundation, intended to be used on skin and containing high amount of filler.

Lamellar mineral fillers having such lamellarity index are for example known from US6348536 as functional fillers for thermoplastic material in order to increase the flexural modulus without diminishing the shock resistance.

However, it was never described nor suggested that such filler could be used in pencil lead in order to have the above mentioned properties, and in particular to have an impact on the vividness of the laydown on the paper, in particular on the vividness of the colored laydown and/or on the smoothness, or softness of the writing/coloring experience.

A first object of the present invention therefore concerns a polymer-based extrudable non-calcined pencil lead comprising a lamellar mineral filler having a lamellarity index greater than 2.8, advantageously greater than 3.5, in particular greater than 4, with Lamellarity index: $(D_{L50} - D_{S50}) / D_{S50}$, in which

$D_{L50}$ = mean dimension of the particles of the lamellar mineral filler obtained by a particle size measurement by Malvern laser diffraction using a wet method and

$D_{S50}$ = mean diameter of the lamellar mineral filler obtained by a measurement by gravity sedimentation using a "Sedigraph" apparatus in which the total lamellar mineral filler content is in the range 5 - 15 %, by weight relative to the total weight of the lead.

A second object of the present invention is a pencil comprising a lead according to the invention.

The lead according to the present invention thus belongs to the category of polymer-based lead, also referred to as synthetic lead, and it is thus non-calcined. Therefore, no calcining/baking step is used in its manufacturing method.

For the purposes of the present invention, the term "polymer-based pencil lead" is intended to mean any pencil lead comprising at least one polymer. According to the present invention, the term "polymer" means compounds (in particular large molecules or macromolecules) comprising many repeated units, in particular at least two repeating units, preferably at least ten repeating units. This polymer thus functions as a matrix for the production of the lead during the manufacturing method. In particular said polymer also governs the mechanical properties, the writing quality and erasing quality in the finished product.

In an advantageous embodiment, the total polymer content of the pencil lead according to the invention is in the range 20 - 45%, advantageously 25 - 40 %, more preferably 30-40%, by weight relative to the total weight of the lead.

In another advantageous embodiment, the polymer of the lead is selected from the group consisting of homo or copolymers of polyesters; homo or copolymers of polyolefins (PO) such as polyethylene, polypropylene and mixtures thereof; homo or copolymers of styrene polymers, such as polystyrene (PS), styrene-acrylonitrile copolymers (SAN), acrylonitrile-butadiene-styrene copolymers (ABS), styrene-butadiene copolymers (SB), general purpose polystyrene (GPPS), high impact polystyrene (HIPS) and mixtures thereof and mixtures thereof.

Advantageously, the polymer of the lead is selected from the group consisting of homo or copolymers of styrene polymers, advantageously said homo or copolymers of styrene polymers are chosen in the group consisting of general purpose polystyrene, acrylonitrile-butadiene-styrene copolymers, styrene-butadiene copolymers and mixtures thereof, still more advantageously in the group consisting of general purpose polystyrene, acrylonitrile-butadiene-styrene copolymers and mixtures thereof, in particular it is general purpose polystyrene.

The lead according to the present invention is extrudable, that is to say, that it can be obtained by extrusion. Advantageously, it is extruded. The lead according to the present invention is advantageously non-expanded. In fact, advantageously no expansion agent is used in its manufacturing method. In addition, advantageously the polymer used is not expanded.

The lead according to the present invention is a pencil lead, that is to say, intended to be used in pencils, in particular in pencils coated with wood or with a synthetic wood material, optionally comprising an intermediate protective layer, in particular as described in patent application WO01/43987, WO 2016/097554 and WO 2017/220914.

The lead according to the present invention comprises at least a lamellar mineral filler having a lamellarity index greater than 2.8, advantageously greater than 3.5, in particular greater than 4, with Lamellarity index: $(D_{L50} - D_{S50}) / D_{S50}$, in which

$D_{L50}$ = mean dimension of the particles of the lamellar mineral filler obtained by a particle size measurement by Malvern laser diffraction using a wet method and

$D_{S50}$ = mean diameter of the lamellar mineral filler obtained by a measurement by gravity sedimentation using a "Sedigraph" apparatus in which the total lamellar mineral filler content is in the range 5 - 15 %, by weight relative to the total weight of the lead.

The lamellar mineral filler has thus preferably the form of a powder before its addition in the lead according to the invention.

Preferably, the lead according to the invention is solid at room temperature. Preferably, according to the present invention, the lead according to the present invention is not a powder (i.e. not in the shape of a powder), i.e. the lead is not in a pulverulent form.

Preferably, the lead according to the invention is a molded and/or extruded solid composition.

To determine the "hardness" of a lead in accordance with the invention, the measurement of flexural strength can be measured. The flexural strength should be understood as the strength and the shock resistance of the pencil. The impact strength can be measured by Charpy impact test according to the standard NF EN ISO 179-1 of 2010.

According to one advantageous embodiment of the invention, the lead according to the invention is characterized in that the pencil flexural resistance is higher than 0.70 daN.

For the purposes of the present invention, the term "lamellarity index" characterizes the shape of the particle of the lamellar mineral filler, and more particularly its flatness (large dimension/thickness). In the present invention, this lamellarity index will be measured by the difference between, on the one hand, the value of the mean dimension of the particles of the lamellar mineral filler ($D_{L50}$) obtained by a particle size measurement by Malvern laser diffraction using a wet method (standard AFNOR NFX11-666) and on the other hand, the value of the mean diameter ($D_{S50}$) obtained by a measurement by sedimentation using a "Sedigraph" (standard AFNOR X11-683), this difference being related to the mean diameter $D_{S50}$.

Lamellarity index: $(D_{L50} - D_{S50}) / D_{S50}$

Reference may be made to the article G.BAUDET and J. P. RONA, Ind. Min. Mines et Carr. Les techn. June, July 1990, pp 55-61 which shows that this index is correlated to the mean ratio of the largest dimension of the particle to its smallest dimension.

For the purposes of the present invention, the term "mean diameter $D_{50}$" is intended to mean a diameter such that 50% of the particles by weight have a size less than the said diameter. For non-spherical particles, the size consists of the equivalent spherical diameter (Stocks diameter). All measurements of the diameters $D_{50}$ were either carried out by means of a "Sedigraph" apparatus by gravity sedimentation in accordance with standard AFNOR X11-683 ($D_{S50}$) or by Malvern laser diffraction using a wet method (standard AFNOR NFX11-666) ($D_{L50}$).

In an advantageous embodiment, the mean diameter $D_{S50}$ of the lamellar mineral filler measured by sedimentation using a "Sedigraph" (standard AFNOR X11-683) is between 0.5 and 5 $\mu$m, more particularly between 0.5 and 4 $\mu$m, still more advantageously between 1 and 3 $\mu$m, in particular of between 1.5 and 2.5 $\mu$m.

In another advantageous embodiment, the mean diameter $D_{L50}$ of the lamellar mineral filler measured by Malvern laser diffraction using a wet method (standard AFNOR NFX11-666) is between 2 and 30 $\mu$m, more particularly between 5 and 20 $\mu$m, still more advantageously between 7 and 15 $\mu$m.

For the purposes of the present invention, the term "lamellar mineral filler" is intended to mean any mineral filler or any synthetic filler of which the structure consists of a stack of elementary leaves. Advantageously the lamellar mineral filler according to the invention is a colorless or white lamellar mineral filler, mineral or synthetic particles of any shape, more advantageously selected in the group consisting of clay, talc, boron nitride, mica and mixtures thereof, more advantageously in the group consisting of mica, talc and mixtures thereof, still more advantageously it is talc, in particular HAR® talc such as the reference Talc Luzenac Har® T84 sold by Imerys. This talc has in particular the following properties:

$D_{L50}$ ($\mu$m) (mean particle size diameter by laser) = 10.5
$D_{S50}$ ($\mu$m) (mean particle size diameter by sedigraph) = 2
Lamellarity index: ($D_{L50}$ - $D_{S50}$) / $D_{S50}$ = (10.5-2) / 2 = 4.25.
Whiteness (Minolta CR400, illuminant D65/2))Y L* (CIE) = 91
Typical aspect ratio (length/thickness) = 120

The lamellar mineral filler according to the invention can be obtained by the process as described in US6348536.

The lamellar mineral filler is preferably used in pencil lead in order to have an impact on the vividness of the laydown on the paper and/or on the smoothness or softness of the writing/drawing/coloring experience.

The total lamellar mineral filler content of the pencil lead according to the invention is in the range 5 - 15%, advantageously 10 - 15 %, by weight relative to the total weight of the lead.

A further object of the invention is the use of a lamellar mineral filler having a lamellarity index greater than 2.8 as defined previously to improve the flexural resistance and/or the smoothness, and/or the vividness of a polymer-based extrudable non-calcined pencil lead in which the total lamellar mineral filler content is in the range 5 - 15 %, by weight relative to the total weight of the lead, in particular when writing/drawing/coloring on paper.

The pencil lead according to the invention can also contain a slip agent. Indeed slip agents are able to modify the surface properties of a film and thus lower the friction between film layers and other surfaces. To be particularly effective the slip agent needs to migrate out of the polymer to the surface and therefore it is advantageous for it to have a degree of incompatibility with the polymer.

The benefits of the use of a slip agent in the pencil lead composition are: enhance both appearance and function (to improve smoothness and glides), improve the flow characteristic of the polymer during processing.

Slip agents are effective because of their natural tendency "to bloom" to the surface of the film after extrusion. The slip agent to be used in the pencil lead according to the present invention is advantageously selected in the group consisting of amides such as ethylene bis stearamide, oleamide, erucamide and stearamide, glycerol derivatives such as glycerol esters such as glycerol ethylhexyl polyhydroxystearate, glycerol behenate, glycerol dibehenate, tribehin, glycerol trihydroxystearate and mixtures thereof, esters of stearic acid, in particular tetraester of stearic acid, esters of pentaerythritol such as pentaerythrityl tetrastearate, and mixtures thereof. More advantageously the slip agent is a glycerol ester, preferably selected in the group consisting of glycerol ethylhexyl polyhydroxystearate, glycerol dibehenate and mixtures thereof.

Advantageously, the total slip agent content of the pencil lead according to the present invention is in the range 0.5 - 5%, more advantageously 2 - 4 %, by weight relative to the total weight of the lead.

The pencil lead according to the present invention can advantageously contain at least a coloring agent.

Advantageously the coloring agent is selected in the group consisting of dyes, pigments and mixtures thereof, more advantageously in the group consisting of organic or inorganic pigments, dyes or lacquered dyes, coated mica as well as coated or uncoated metal bronzed, $TiO_2$, carbon black, graphite and mixture of these coloring agents. The term "pigments" should be understood as meaning white or coloured, mineral or organic particles of any form, which are insoluble in the medium, and which are intended to color the lead. The term "dyes" should be understood as meaning white or colored, mineral or organic particles of any form, which are soluble in the medium, and which are intended to color the lead. In an advantageous embodiment, the coloring agent is selected in the group consisting of pigments and mixtures thereof, still more advantageously in the group consisting of organic pigments, $TiO_2$ and mixtures thereof. Depending on the desired color of the lead, the pigment is a red, black, yellow, orange, blue, magenta or violet pigment, and mixtures thereof.

The pigment and/or carbon black can be coated or mixed with a polyolefin wax (for example in the form of a masterbatch, a pigmentary preparation or a dispersion of pigment in a polyolefin wax) as mentioned in WO2016/097555 and WO2016/097533. The coloring agent gives the lead color.

Advantageously, the total coloring agent content of the pencil lead according to the invention is in the range 2 - 25%, more advantageously 10 - 20 %, by weight relative to the total weight of the lead.

According to this embodiment, preferably said pencil is a color pencil lead or a graphite pencil lead, advantageously a color pencil lead.

Advantageously, according to this embodiment wherein the pencil lead according to the present invention contains at least coloring agent (colored pencil lead), the obtained deposit (laydown) when applied on a surface, such as paper, exhibits a good intensity (or vividness) of the color. According to a preferred embodiment of the invention, the pencil flexural resistance is higher than 0.70 daN.

The pencil lead according to the present invention can contain a wax.

For the purposes of the present invention, the term "wax" is intended to mean a lipophilic compound, which is solid at room temperature (25°C), with a reversible solid/liquid change of state, and having a melting point of 30°C or more, which may be up to 180°C

In the present invention, the melting point corresponds to the transition stage between a fully crystalline or partially crystalline solid state and an amorphous liquid of variable viscosity, as described in ISO 11357-3; 2011. The term "transition", also referred to as "fusion", is characterized by an endothermic peak in the DSC curve.

The melting point of wax can be measured by differential scanning calorimetry (DSC) using a TA Instruments Q20 apparatus, on a temperature range from 20 to 90°C, at cooling/ heating speeds of 10°C/minute.

This measurement is made with 5 mg of sample mass.

Method:

1. Equilibrate at 0°C
2. Mark end of cycle
3. Ramp: 10°C/min to 90°C
4. Isothermal for 2 min
5. Ramp: 10°C/min to 0°C
6. Isothermal for 2 minutes
7. End of method

The waxes may be hydrocarbon-based waxes, lignite-waxes, amide waxes, fatty acids, fatty acid esters, and/or ester waxes, and mixtures thereof, and may be of plant, mineral, animal and/or synthetic origin.

In particular, the waxes have a melting point of greater than 30°C and better still greater than 50°C, which may be up to 180°C.

Advantageously the wax according to the invention is selected in the group consisting of ester waxes, chosen among stearates waxes (melting point: 120-160°C) such as calcium stearate, lignite waxes such as montan waxes, amide waxes, hydrocarbon-based waxes such as paraffin (melting point: 50-60°C), fatty acids such as stearic acid and palmitic acid, fatty acid esters and mixtures thereof, preferably ester waxes, more preferably stearate waxes, more advantageously it is calcium stearate. It is indeed particularly advantageous if the wax is formed of calcium stearate or comprises calcium stearate.

Advantageously the total wax content of the pencil lead according to the invention is in the range 10 - 40%, advantageously 20 - 35 %, by weight relative to the total weight of the lead.

The pencil lead according to the present invention can contain additional filler, different from the described lamellar mineral filler having a high lamellarity index, such as mineral fillers, for example chosen from phyllosilicates, chalk, barite, kaolin, bentonite and mixtures thereof. Advantageously it does not contain any other filler than the lamellar mineral filler having a lamellarity index greater than 2.8 according to the invention.

The pencil lead according to the present invention can contain an additive. This additive can be selected from additives which are well known to the person skilled in the art in the field of pencil leads, advantageously it is selected in the group consisting of lubricants such as zinc stearate, plasticizers such as phthalate, adipate, benzoate, sebacate and/or citrate plasticizers, in particular dibenzoate, surface-active agents, thermal stabilizers and mixtures thereof.

Advantageously the total additive content of the pencil lead according to the invention is in the range 3 - 10%, advantageously 5 - 9 %, by weight relative to the total weight of the lead.

The pencil lead according to the invention can be a color pencil lead or a graphite pencil lead, advantageously it is a color pencil lead.

In the case where the pencil lead is a graphite pencil lead, the coloring agent comprises graphite, carbon black or mixture thereof.

In a particular embodiment of the present invention, the pencil lead has a diameter between 2 and 3.9 mm; advantageously it is a lead having a diameter between 2 and 2.3 mm (thin lead) or a lead having a diameter between 3 and 3.8 mm (thick lead) or a lead having a diameter between 3.4 and 3.8 mm (very thick lead).

Advantageously, the lead according to the present invention can have a hexagonal, round or triangular cross section, advantageously a round or hexagonal cross section.

The lead according to the present invention can be manufactured via processes that are well known to those skilled in the art.

For example, all the components are mixed together and the mixture obtained is extruded at suitable temperatures. The lead obtained is then cooled. It is thus not calcined and/or baked.

The lead according to the present invention thus has sufficient color vividness while at the same time having good mechanical properties, in particular in terms of flexural strength and/or impact strength, and while producing a continuous deposit on paper with smoothness. The flexural strength should be understood as the strength and the shock resistance of the pencil. The impact strength can be measured by Charpy impact test according to the standard NF EN ISO 179-1 of 2010.

According to the invention, it is possible to provide a lead for writing and/or coloring, whose tensile strength and flexural strength have been improved and which also improved elasticity.

The invention also relates to a pencil comprising a lead according to the present invention, in particular a pencil coated with wood or with synthetic wood material, comprising optionally an intermediate protective layer, for example, as described in patent applications WO 01/43987, WO 2016/097554 and WO 2017/220914.

The pencil according to the invention can be a color pencil or a graphite pencil, advantageously it is a color pencil.

Advantageously, the pencil according to the invention is obtained by coextrusion of the lead and of the synthetic wood material and optionally of the intermediate protective layer.

In particular, the synthetic wood material is based on styrene polymer, and the intermediate protective layer can also plays the role of adhesion layer if the lead comprises a polyolefin polymer and advantageously the intermediate protective layer can comprise a mixture of EVA and of polystyrene as described in WO 2016/097554 or an ethylene (C1-C4 alkyl) acrylate copolymer, alone or as a blend with a styrene polymer as described in WO2017/220914.

Advantageously, the synthetic wood material is expanded so as to have a density equivalent to natural wood.

In a particular embodiment of the present invention, the pencil according to the invention comprises an additional decorative layer, advantageously of varnish, surrounding the synthetic wood material, in particular concentrically. Advantageously, the decorative layer is made of a material that is compatible with that of the synthetic wood material.

Advantageously, the pencil according to the present invention can have a hexagonal, round or triangular cross section, advantageously a round or hexagonal cross section.

Advantageously, it can comprise a means for erasing, such as an eraser, at the unsharpened end of the pencil.

The invention finally concerns the use of a lamellar mineral filler having a lamellarity index greater than 2.8 as defined above to improve the flexural resistance and/or the smoothness, and/or the vividness of a polymer-based extrudable non-calcined pencil lead in which the total lamellar mineral filler content is in the range 5 - 15 %, by weight relative to the total weight of the lead.

The invention will be understood better upon reading the description of the following examples which are given as a non-limiting indication.

The expression "between ... and ..." or "ranging from ...to ..." should be understood as including the values of the limits.

## Examples

Examples of compositions of pencil lead according to the present invention (examples 1, 2, 3 and 4) containing a mineral lamellar filler having a lamellarity index of 4.25 (Talc Luzenac Har® T84) were compared with comparative compositions of pencil lead (comparative examples 1 and 2) wherein the high lamellarity mineral filler has been replaced by a mineral filler with a lamellarity index of lower than 2.8 (Luzenac 20MO talc having the following properties: $D_{L50}$ ($\mu$m) (particle size by laser) = 10.5; $D_{S50}$ ($\mu$m) (particle size by sedigraph) = 5; Lamellarity index : $(D_{L50} - D_{S50})/D_{S50} = (10.5-5)/5 = 1.1$).

The pencil leads are produced by carrying out the steps detailed below:

Mixing and granulating all formulation components of the lead to form a writing substance granulate;

Extruding the writing substance granulate at a temperature in the range of 130 to 200°C on an extruder by a suitable mouthpiece to form endless writing substance strands;
Cooling and hardening the endless writing substance strand; and
Cutting the endless writing substance strand to final lengths, in particular to the required pencil length.

The properties of color vividness (ΔC) and Pencil Flexural resistance (Flexion (daN)) of the leads were measured as follow:

Pencil Flexural resistance:

The pencil flexural resistance test was carried out in order to check the strength and the shock resistance of the pencil.
The characteristics of the test were as follows:

Equipment: Dynamometer LLOYD-AMETEK Instrument type, U-bracket span of 6 cm, Sensor ADAMEL DY20 Chatillon Instrument type TCD110 50 daN
Descent speed of sensor: 50 mm.min$^{-1}$

Operating method:

1. Turn on the dynamometer.
2. Locate the sensor in the up position.
3. Fix the pencil on the U-bracket.
4. Go down the needle.
5. Record the results expressed in daN.

Colorimetry:

The test protocol is as follows:

Equipment:

- Writing apparatus HUTT HST 10 or equivalent used under the following conditions:

  • Writing speed: 4.5 m/min
  • Writing angle: 70°
  • Other parameters: refer to table below

- Iso paper: AURORA ISO-14145
- Apparatus KONICA MINOLTA model CM-3610 A
- Pencil sharpener
- Viewing angle of light: 10°

Table 1

|  | Parameters for producing the rubbings |
|---|---|
| Article type | Lead |
| Diameter lead (mm) | 2.14 |
| Paper feed (mm/min) | 0.15 |
| Total weight article / support / additional weight (g) | 175 |
| Writing length for axial rotation of the article (m) | 9 |

(continued)

|  | Parameters for producing the rubbings |
|---|---|
| Article type | Lead |
| Writing length (m) | 40 |
| Paper type | AURORA ISO-14145 |

Operating procedure:

1) Prepare the writing article in the appropriate supports, sharpen the lead if necessary.
2) Produce the rubbings according to the parameters indicated in the preceding table
3) Measure the density of the color of the rubbing with the help of the spectroEye (minimum 2 measurements per blackness) according to DIN 16536 NB

Protocol of measurement of the density of the color of the rubbing with the help of the spectroEye (minimum 2 measurements per blackness) according to DIN 16536 NB:

$$\Delta E = \sqrt{(L^* - L_0^*)^2 + (a^* - a_0^*)^2 + (b^* - b_0^*)^2}$$

To determine the "vividness" of a lead in accordance with the invention, the measurement of colorimetry can be measured. The "vividness" should be understood as the intensity of the deposit i.e. laydown of the pencil when applied on a surface. The vividness can be measured by colorimetry test by measuring the color difference $\Delta C$ between a sample color and a comparative color.

The density of the color of the deposit has been measured in the CIE L*a*b* system using a KONICA MINOLTA CM-3610 A model spectrocolorimeter in the CIE L a b system (illuminant: D65, angle 10°, specular components included).

According to this system, L* indicates the lightness of the color of the deposit. The lowest is the value of L, the most intense (or "darker") is the color of the deposit. The chromaticity coordinates are expressed by the parameters a* and b*, a* indicating the axis of red/green shades and b* the axis of yellow/blue shades. The chromaticity C* is obtained from the following formula.

$$C_{ab}^* = \sqrt{a^{*2} + b^{*2}}$$

All colorimetric measurements have been done on a deposit made on a white paper. The greater the value of C* (also called C*$_{ab}$), the better the saturation of the color of the deposit.

The composition (in weight %) and results are indicated in tables 2 and 3 below:

Table 2: polymer = GPPS

|  | Trade name | Example 1 | Example 2 | Example 3 | Comparative example 1 |
|---|---|---|---|---|---|
| Polymer | GPPS | 36% | 33% | 33% | 36% |
| Lamellar mineral filler | Talc Luzenac Har® T84 | 14% | 14% | 14% | 0% |
| Mineral filler | Talc 20 Mo | 0% | 0% | 0% | 14% |
| Wax | Calcium stearate | 26% | 26% | 26% | 26% |
| Coloring agent | Organic pigment | 7.75% | 7.75% | 7.75% | 7.75% |
| Coloring agent | $TiO_2$ | 7.75% | 7.75% | 7.75% | 7.75% |
| Additive Plasticizer | Dibenzoate | 6% | 6% | 6% | 6% |
| Additive Lubricant | Zinc stearate | 2.5% | 2.5% | 2.5% | 2.5% |

(continued)

|  | Trade name | Example 1 | Example 2 | Example 3 | Comparative example 1 |
|---|---|---|---|---|---|
| Slip agent | Glycerol ethylhexyl polyhydroxystearate | 0% | 3% | 0% | 0% |
| Slip agent | Glycerol dibehenate | 0% | 0% | 3% | 0% |
| Total |  | 100% | 100% | 100% | 100% |
|  |  |  |  |  |  |
| Flexion (daN) |  | 0.852 | 0.889 | 0.765 | 0.755 |
| C* |  | 18.98 | 20.35 | 19.53 | 17.15 |

Table 3: polymer = ABS

|  | Trade name | Example 4 | Comparative example 2 |
|---|---|---|---|
| Bonding agent | ABS | 36% | 36% |
| Mineral filler | Talc 20MO | 0% | 14% |
| Lamellar mineral filler | Talc Luzenac Har® T84 | 14% | 0% |
| Wax | Calcium stearate | 26% | 26% |
| Coloring agent | Organic pigment | 7.75% | 7.75% |
|  | TiO2 | 7.75% | 7.75% |
| Additive Plasticizer | Dibenzoate | 6% | 6% |
| Additive Lubricant | Zinc stearate | 2.5% | 2.5% |
| Slip agent | Glycerol ethylhexyl polyhydroxystearate | 0% | 0% |
| Total |  | 100% | 100% |
|  |  |  |  |
| Flexion (daN) |  | 0.940 | 0.920 |
| C* |  | 19.59 | 18.75 |

As a consequence, the leads of examples 1, 2, 3 and 4 according to the invention which comprise a high lamellarity mineral filler have enhanced flexural properties and color vividness compared to the leads of comparative examples 1 and 2 wherein said high lamellarity mineral filler has been replaced by a low lamellarity mineral filler.

In addition, the smoothness, the glide as well as the softness of the lead has been evaluated by writing, drawing and/or coloring manually with the leads according to examples 1 to 4 and it has been observed that they deliver an effortless and smooth-gliding writing, drawing and/or coloring experience on paper.

**Claims**

1. A polymer-based extrudable non-calcined pencil lead comprising a lamellar mineral filler having a lamellarity index greater than 2.8, advantageously greater than 3.5, in particular greater than 4, with Lamellarity index: $(D_{L50} - D_{S50}) / D_{S50}$, in which

$D_{L50}$ = mean dimension of the particles of the lamellar mineral filler obtained by a particle size measurement by Malvern laser diffraction using a wet method and
$D_{S50}$ = mean diameter of the lamellar mineral filler obtained by a measurement by gravity sedimentation using a "Sedigraph" apparatus
**characterized in that** the total lamellar mineral filler content is in the range 5 - 15 %, by weight relative to the total weight of the lead.

**2.** The pencil lead according to claim 1, **characterized in that** the lamellar mineral filler is talc.

**3.** The pencil lead according to any of claim 1 or 2, **characterized in that** the total lamellar mineral filler content is in the range 10 - 15 % by weight relative to the total weight of the lead.

**4.** The pencil lead according to any one of claims 1 to 3, **characterized in that** the polymer is selected from the group consisting of homo or copolymers of polyesters; homo or copolymers of polyolefins such as polyethylene, polypropylene and mixtures thereof; homo or copolymers of styrene polymers, such as polystyrene, styrene-acrylonitrile copolymers, acrylonitrile-butadiene-styrene copolymers, styrene-butadiene copolymers, general purpose polystyrene, high impact polystyrene and mixtures thereof.

**5.** The pencil lead according to claim 4, **characterized in that** the polymer is selected from the group consisting of homo or copolymers of styrene polymers, advantageously in the group consisting of general purpose polystyrene, acrylonitrile-butadiene-styrene copolymers, styrene-butadiene copolymers and mixtures thereof, still more advantageously in the group consisting of general purpose polystyrene, acrylonitrile-butadiene-styrene copolymers and mixtures thereof, in particular it is general purpose polystyrene.

**6.** The pencil lead according to any one of claims 1 to 5, **characterized in that** the total polymer content is in the range 20 - 45%, advantageously 25 - 40 %, by weight relative to the total weight of the lead.

**7.** The pencil lead according to any one of claims 1 to 6, **characterized in that** it contains a slip agent, advantageously selected in the group consisting of amides such as ethylene bis stearamide, oleamide, erucamide and stearamide, glycerol derivatives such as glycerol esters such as glycerol ethylhexyl polyhydroxystearate, glycerol behenate, glycerol dibehenate, tribehin, glycerol trihydroxystearate and mixtures thereof, esters of stearic acid, in particular tetraester of stearic acid, esters of pentaerythritol such as pentaerythrityl tetrastearate, and mixtures thereof, advantageously glycerol esters, preferably selected in the group consisting of glycerol ethylhexyl polyhydroxystearate, glycerol dibehenate and mixtures thereof.

**8.** The pencil lead according to claim 7, **characterized in that** the total slip agent content is in the range 0.5 - 5%, advantageously 2 - 4 %, by weight relative to the total weight of the lead.

**9.** The pencil lead according to any one of claims 1 to 8, **characterized in that** it contains a coloring agent, advantageously selected in the group consisting of dyes, pigments and mixtures thereof, more advantageously in the group consisting of pigments and mixtures thereof, still more advantageously in the group consisting of organic pigments, $TiO_2$ and mixtures thereof.

**10.** The pencil lead according to claim 9, **characterized in that** the total coloring agent content is in the range 2 - 25%, advantageously 10 - 20 %, by weight relative to the total weight of the lead.

**11.** The pencil lead according to any one of claims 1 to 10, **characterized in that** it contains a wax, advantageously selected in the group consisting of ester waxes chosen among stearate waxes such as calcium stearate, lignite waxes such as montan waxes, amide waxes, hydrocarbon-based waxes such as paraffin, fatty acids such as stearic acid and palmitic acid, fatty acid esters and mixtures thereof, preferably ester waxes, more preferably stearate waxes, more advantageously it is calcium stearate.

**12.** The pencil lead according to claim 11, **characterized in that** the total wax content is in the range 10 - 40%, advantageously 20 - 35 %, by weight relative to the total weight of the lead.

**13.** The pencil lead according to any one of claims 1 to 12, **characterized in that** it contains an additive, advantageously selected in the group consisting of lubricants, plasticizers, surface-active agents, thermal stabilizers and mixtures thereof.

**14.** The pencil lead according to claim 13, **characterized in that** the total additive content is in the range 3 - 10%, advantageously 5 - 9 %, by weight relative to the total weight of the lead.

**15.** The pencil lead according to any one of claims 1 to 14, **characterized in that** it is a color pencil lead or a graphite pencil lead, advantageously a color pencil lead.

16. The pencil lead according to any one of claims 1 to 15, **characterized in that** it is extruded.

17. A pencil comprising a lead as claimed in any one of claims 1 to 16, advantageously it is a color pencil.

18. Use of lamellar mineral filler having a lamellarity index greater than 2.8 as defined in any of claims 1 to 16 to improve the flexural resistance and/or the smoothness, and/or the vividness of a polymer-based extrudable non-calcined pencil lead wherein the total lamellar mineral filler content is in the range 5 - 15 %, by weight relative to the total weight of the lead.

**Patentansprüche**

1. Extrudierbare nicht kalzinierte Stiftmine auf Polymerbasis, umfassend einen lamellaren mineralischen Füllstoff, der einen Lamellaritätsindex von größer als 2,8, vorteilhafterweise größer als 3,5, insbesondere größer als 4, aufweist, mit dem Lamellaritätsindex: $(D_{L50} - D_{S50}) / D_{S50}$, in dem

   $D_{L50}$ = eine mittlere Abmessung der Partikel des lamellaren mineralischen Füllstoffs, erhalten durch eine Partikelgrößenmessung durch Malvern-Laserbeugung unter Verwendung eines Nassverfahrens, und
   $D_{S50}$ = ein mittlerer Durchmesser des lamellaren mineralischen Füllstoffs, erhalten durch eine Messung durch Schwerkraftsedimentation unter Verwendung einer "Sedigraph"-Einrichtung, **dadurch gekennzeichnet, dass** der Gesamtgehalt an lamellarem mineralischem Füllstoff in dem Bereich von 5-15 Gew.-%,

   bezüglich des Gesamtgewichts der Mine, liegt.

2. Stiftmine nach Anspruch 1, **dadurch gekennzeichnet, dass** der lamellare mineralische Füllstoff Talk ist.

3. Stiftmine nach einem der Ansprüche 1 oder 2, **dadurch gekennzeichnet, dass** der Gesamtgehalt an lamellarem mineralischem Füllstoff in dem Bereich von 10-15 Gew.-%, bezüglich des Gesamtgewichts der Mine, liegt.

4. Stiftmine nach einem der Ansprüche 1 bis 3, **dadurch gekennzeichnet, dass** das Polymer ausgewählt ist aus der Gruppe, bestehend aus Homo- oder Copolymeren von Polyestern; Homo- oder Copolymeren von Polyolefinen wie Polyethylen, Polypropylen und Mischungen davon; Homo- oder Copolymeren von Styrolpolymeren, wie Polystyrol, Styrol-Acrylnitril-Copolymeren, Acrylnitril-Butadien-Styrol-Copolymeren, Styrol-Butadien-Copolymeren, Allzweckpolystyrol, hochschlagfestem Polystyrol und Mischungen davon.

5. Stiftmine nach Anspruch 4, **dadurch gekennzeichnet, dass** das Polymer ausgewählt ist aus der Gruppe, bestehend aus Homo- oder Copolymeren von Styrolpolymeren, vorteilhafterweise aus der Gruppe, bestehend aus Allzweckpolystyrol, Acrylnitril-Butadien-Styrol-Copolymeren, Styrol-Butadien-Copolymeren und Mischungen davon, noch vorteilhafter aus der Gruppe, bestehend aus Allzweckpolystyrol, Acrylnitril-Butadien-Styrol-Copolymeren und Mischungen davon, wobei es insbesondere Allzweckpolystyrol ist.

6. Stiftmine nach einem der Ansprüche 1 bis 5, **dadurch gekennzeichnet, dass** der Gesamtpolymergehalt in dem Bereich von 20-45 Gew.-%, vorteilhafterweise 25-40 Gew.-%, bezüglich des Gesamtgewichts der Mine, liegt.

7. Stiftmine nach einem der Ansprüche 1 bis 6, **dadurch gekennzeichnet, dass** sie ein Gleitmittel enthält, das vorteilhafterweise ausgewählt ist aus der Gruppe, bestehend aus Amiden wie Ethylenbisstearamid, Oleamid, Erucamid und Stearamid, Glycerinderivaten wie Glycerinestern wie Glycerinethylhexylpolyhydroxystearat, Glycerinbehenat, Glycerindibehenat, Tribehin, Glycerintrihydroxystearat und Mischungen davon, Estern von Stearinsäure, insbesondere Tetraester von Stearinsäure, Estern von Pentaerythrit wie Pentaerythrityltetrastearat und Mischungen davon, vorteilhafterweise Glycerinestern, die vorzugsweise ausgewählt sind aus der Gruppe, bestehend aus Glycerinethylhexylpolyhydroxystearat, Glycerindibehenat und Mischungen davon.

8. Stiftmine nach Anspruch 7, **dadurch gekennzeichnet, dass** der Gesamtgleitmittelgehalt in dem Bereich von 0,5-5 Gew.-%, vorteilhafterweise 2-4 Gew.-%, bezüglich des Gesamtgewichts der Mine, liegt.

**9.** Stiftmine nach einem der Ansprüche 1 bis 8,
**dadurch gekennzeichnet, dass** sie ein Färbemittel enthält, das vorteilhafterweise ausgewählt ist aus der Gruppe, bestehend aus Farbstoffen, Pigmenten und Mischungen davon, vorteilhafter aus der Gruppe, bestehend aus Pigmenten und Mischungen davon, noch vorteilhafter aus der Gruppe, bestehend aus organischen Pigmenten, $TiO_2$ und Mischungen davon.

**10.** Stiftmine nach Anspruch 9, **dadurch gekennzeichnet, dass** der Gesamtfärbemittelgehalt in dem Bereich von 2-25 Gew.-%, vorteilhafterweise 10-20 Gew.-%, bezüglich des Gesamtgewichts der Mine, liegt.

**11.** Stiftmine nach einem der Ansprüche 1 bis 10,
**dadurch gekennzeichnet, dass** sie ein Wachs enthält, das vorteilhafterweise ausgewählt ist aus der Gruppe, bestehend aus Esterwachsen, die gewählt sind aus Stearatwachsen wie Calciumstearat, Lignitwachsen wie Montanwachsen, Amidwachsen, Wachsen auf Kohlenwasserstoffbasis wie Paraffin, Fettsäuren wie Stearinsäure und Palmitinsäure, Fettsäureestern und Mischungen davon, vorzugsweise Esterwachsen, mehr bevorzugt Stearatwachsen, wobei es vorteilhafter Calciumstearat ist.

**12.** Stiftmine nach Anspruch 11, **dadurch gekennzeichnet, dass** der Gesamtwachsgehalt in dem Bereich von 10-40 Gew.-%, vorteilhafterweise 20-35 Gew.-%, bezüglich des Gesamtgewichts der Mine, liegt.

**13.** Stiftmine nach einem der Ansprüche 1 bis 12,
**dadurch gekennzeichnet, dass** sie ein Additiv enthält, das vorteilhafterweise ausgewählt ist aus der Gruppe, bestehend aus Schmiermitteln, Weichmachern, oberflächenaktiven Mitteln, thermischen Stabilisatoren und Mischungen davon.

**14.** Stiftmine nach Anspruch 13, **dadurch gekennzeichnet, dass** der Gesamtadditivgehalt in dem Bereich von 3-10 Gew.-%, vorteilhafterweise 5-9 Gew.-%, bezüglich des Gesamtgewichts der Mine, liegt.

**15.** Stiftmine nach einem der Ansprüche 1 bis 14,
**dadurch gekennzeichnet, dass** sie eine Farbstiftmine oder eine Bleistiftmine, vorteilhafterweise eine Farbstiftmine, ist.

**16.** Stiftmine nach einem der Ansprüche 1 bis 15,
**dadurch gekennzeichnet, dass** sie extrudiert ist.

**17.** Stift, umfassend eine Mine nach einem der Ansprüche 1 bis 16, wobei er vorteilhafterweise ein Farbstift ist.

**18.** Verwendung des lamellaren mineralischen Füllstoffs, der einen Lamellaritätsindex von größer als 2,8 aufweist, wie in einem der Ansprüche 1 bis 16 definiert, um die Biegefestigkeit und/oder die Glätte und/oder die Lebhaftigkeit einer extrudierbaren nicht kalzinierten Stiftmine auf Polymerbasis zu verbessern, wobei der Gesamtgehalt an lamellarem mineralischem Füllstoff in dem Bereich von 5-15 Gew.-%, bezüglich des Gesamtgewichts der Mine, liegt.

## Revendications

**1.** Mine de crayon extrudable non calcinée à base de polymère comprenant une charge minérale lamellaire ayant un indice de lamellarité supérieur à 2,8, avantageusement supérieur à 3,5, en particulier supérieur à 4, l'indice de lamellarité étant : $(D_{L50} - D_{S50}) / D_{S50}$, dans lequel

$D_{L50}$ = dimension moyenne des particules de la charge minérale lamellaire obtenue par une mesure de taille de particules par diffraction laser de Malvern à l'aide d'une méthode par voie humide et
$D_{S50}$ = diamètre moyen de la charge minérale lamellaire obtenu par une mesure par sédimentation par gravité à l'aide d'un appareil « Sedigraph » **caractérisée en ce que** la teneur totale en charge minérale lamellaire est comprise dans la plage de 5 à 15 % en poids par rapport au poids total de la mine.

**2.** Mine de crayon selon la revendication 1, **caractérisée en ce que** la charge minérale lamellaire est du talc.

**3.** Mine de crayon selon l'une quelconque de la revendication 1 ou 2,
**caractérisée en ce que** la teneur totale en charge minérale lamellaire est comprise dans la plage de 10 à 15 % en poids par rapport au poids total de la mine.

4.  Mine de crayon selon l'une quelconque des revendications 1 à 3, **caractérisée en ce que** le polymère est choisi dans le groupe constitué d'homo ou copolymères de polyesters ; homo ou copolymères de polyoléfines tels que polyéthylène, polypropylène et mélanges de ceux-ci ; homo ou copolymères de polymères de styrène, tels que polystyrène, copolymères styrène-acrylonitrile, copolymères acrylonitrile-butadiène-styrène, copolymères styrène-butadiène, polystyrène à usage général, polystyrène à haute résistance aux chocs et mélanges de ceux-ci.

5.  Mine selon la revendication 4, **caractérisée en ce que** le polymère est choisi dans le groupe constitué d'homo ou copolymères de polymères de styrène, avantageusement dans le groupe constitué de polystyrène à usage général, copolymères acrylonitrile-butadiène-styrène, copolymères styrène-butadiène et mélanges de ceux-ci, encore plus avantageusement dans le groupe constitué de polystyrène à usage général, copolymères acrylonitrile-butadiène-styrène et mélanges de ceux-ci, en particulier il s'agit du polystyrène à usage général.

6.  Mine de crayon selon l'une quelconque des revendications 1 à 5, **caractérisée en ce que** la teneur totale en polymère est comprise dans la plage de 20 à 45 %, avantageusement 25 à 40 %, en poids par rapport au poids total de la mine.

7.  Mine de crayon selon l'une quelconque des revendications 1 à 6, **caractérisée en ce qu'**elle contient un agent glissant, avantageusement choisi dans le groupe constitué d'amides tels qu'éthylène bis stéaramide, oléamide, érucamide et stéaramide, dérivés de glycérol tels qu'esters de glycérol tels qu'éthylhexyl polyhydroxystéarate de glycérol, béhénate de glycérol, dibéhénate de glycérol, tribéhine, trihydroxystéarate de glycérol et mélanges de ceux-ci, esters d'acide stéarique, en particulier tétraester d'acide stéarique, esters de pentaérythritol tels que tétrastéarate de pentaérythrityle, et mélanges de ceux-ci, avantageusement esters de glycérol, de préférence choisis dans le groupe constitué de éthylhexyl polyhydroxystéarate de glycérol, dibéhénate de glycérol et mélanges de ceux-ci.

8.  Mine de crayon selon la revendication 7, **caractérisée en ce que** la teneur totale en agent glissant est comprise dans la plage de 0,5 à 5 %, avantageusement 2 à 4 %, en poids par rapport au poids total de la mine.

9.  Mine de crayon selon l'une quelconque des revendications 1 à 8, **caractérisée en ce qu'**elle contient un agent colorant, avantageusement choisi dans le groupe constitué de colorants, pigments et mélanges de ceux-ci, plus avantageusement dans le groupe constitué de pigments et mélanges de ceux-ci, encore plus avantageusement dans le groupe constitué de pigments organiques, $TiO_2$ et mélanges de ceux-ci.

10. Mine de crayon selon la revendication 9, **caractérisée en ce que** la teneur totale en colorant est comprise dans la plage de 2 à 25 %, avantageusement 10 à 20 %, en poids par rapport au poids total de la mine.

11. Mine de crayon selon l'une quelconque des revendications 1 à 10, **caractérisée en ce qu'**elle contient une cire, avantageusement choisie dans le groupe constitué de cires d'ester choisies parmi cires de stéarate telles que stéarate de calcium, cires de lignite telles que cires de montan, cires d'amide, cires à base d'hydrocarbures telles que paraffine, acides gras tels qu'acide stéarique et acide palmitique, esters d'acides gras et mélanges de ceux-ci, de préférence cires d'ester, plus préférablement cires de stéarate, plus avantageusement il s'agit du stéarate de calcium.

12. Mine de crayon selon la revendication 11, **caractérisée en ce que** la teneur totale en cire est comprise dans la plage de 10 à 40 %, avantageusement 20 à 35 %, en poids par rapport au poids total de la mine.

13. Mine de crayon selon l'une quelconque des revendications 1 à 12, **caractérisée en ce qu'**elle contient un additif, avantageusement choisi dans le groupe constitué de lubrifiants, plastifiants, agents tensioactifs, stabilisateurs thermiques et mélanges de ceux-ci.

14. Mine de crayon selon la revendication 13, **caractérisée en ce que** la teneur totale en additifs est comprise dans la plage de 3 à 10 %, avantageusement 5 à 9 %, en poids par rapport au poids total de la mine.

**15.** Mine de crayon selon l'une quelconque des revendications 1 à 14, **caractérisée en ce qu'**il s'agit d'une mine de crayon de couleur ou d'une mine de crayon graphite, avantageusement d'une mine de crayon de couleur.

**16.** Mine de crayon selon l'une quelconque des revendications 1 à 15, **caractérisée en ce qu'**elle est extrudée.

**17.** Crayon comprenant une mine selon l'une quelconque des revendications 1 à 16, avantageusement il s'agit d'un crayon de couleur.

**18.** Utilisation d'une charge minérale lamellaire ayant un indice de lamellarité supérieur à 2,8, telle que définie dans l'une quelconque des revendications 1 à 16 pour l'amélioration de la résistance à la flexion et/ou de la douceur, et/ou de la vivacité d'une mine de crayon extrudable non calcinée à base de polymère dans laquelle la teneur totale en charge minérale lamellaire est comprise dans la plage de 5 à 15 % en poids par rapport au poids total de la mine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 20218189467 A
- US 6815471 B
- US 2017349775 A
- US 2018071181 A
- US 6348536 B
- WO 0143987 A
- WO 2016097554 A
- WO 2017220914 A
- WO 2016097555 A
- WO 2016097533 A

### Non-patent literature cited in the description

- **G.BAUDET** ; **J. P. RONA**. *Ind. Min. Mines et Carr. Les techn.*, June 1990, 55-61